# EUROPEAN PATENT SPECIFICATION

(11) **EP 4 139 564 B1**
(45) Date of publication and mention of the grant of the patent: **03.12.2025**
(21) Application number: 21792457.0
(22) Date of filing: 22.04.2021
(51) Int. Cl.: F01M 1/08, F01M 1/16, F16N 7/38

(54) **METHOD FOR LUBRICATING LARGE SLOW-RUNNING MARINE DIESEL ENGINES**
VERFAHREN ZUM SCHMIEREN GROSSER LANGSAM LAUFENDER SCHIFFSDIESELMOTOREN
PROCÉDÉ DE LUBRIFICATION DE GROS MOTEURS DIESEL MARINS LENTS

(30) Priority: 22.04.2020 DK PA202070249
(43) Date of publication of application: 01.03.2023
(73) Proprietor: Hans Jensen Lubricators A/S, 9560 Hadsund (DK)
(72) Inventor: JENSEN, Rasmus Hans, 9000 Aalborg (DK); PETERSEN, Hans Heinrich, 2680 Solrød Strand (DK)
(74) Representative: Patrade A/S
(86) International application number: PCT/DK2021/050126
(87) International publication number: WO 2021/213603

(56) References cited:
- EP-A2- 1 582 706
- EP-B1- 1 582 706
- WO-A1-2007/057027
- WO-A1-2010/149162
- JP-A- 2005 291 108
- JP-A- 2018 028 315
- JP-A- 2019 100 317
- US-A1- 2012 118 260

## Description

### Field of the Invention

The present invention is directed to a method for lubricating large slow-running marine diesel engines, said diesel engines having at least one cylinder in which cylinder a piston moves, said piston having a ring pack, where injection of lubricating oil is performed via a number of injection units corresponding to a multiple of the cylinder number in the engine, where the lubricating oil is supplied as a combination of injection of at least two parts of the lubricating oil, where said at least two parts of lubricating oil is delivered at at least two different piston positions, where the at least two different piston positions are selected among piston positions for injecting before, during and after the passage of the piston by the injection unit, and where the lubricating oil is supplied by injection directly on a ring area of the wall of the cylinder wherein each injection unit is controlled by a control unit where a plurality of lubrication routines are stored in a memory in said control unit, where the control unit receives input either from an input station or from one or more sensors, where said input may determine implementation of one of a multitude of possible lubrication routines, where each lubrication routine is distinguished by a duration, a quantity of lubricating oil and/or one or more distinct injection phases relative to the position of the piston, where each of the one or more distinct injection phases will inject a quantity of lubricating oil expressed in percentages of the total amount of lubricating oil to be injected.

### Background of the Invention

In the art exits various systems to lubricate both two-stroke and four-stroke large marine diesel engines in order to minimize tear and wear between the moving piston and the cylinder wall.

Three different methods are used today for cylinder lubrication.

A first method comprises conventional cylinder lubrication.

For this is used a system with mechanical lubricating apparatuses which are driven directly via the chain drive of the engine. Synchronous operation of lubricating apparatus and engine is hereby achieved. Such a system typically consists of mechanical lubricating apparatus with a piston pump and associated check valves. At the outlet of the lubricating apparatus, a check valve is provided which through a lubricating oil tube is coupled to an injecting unit (injector/check valve). In this type of system, the oil is supplied to the cylinder immediately before the uppermost piston ring of the piston passes the injection unit. Lubricating oil is typically supplied to the cylinder by each engine stroke.

In these conventional cylinder lubricating apparatuses, mainly for large two-stroke diesel engines, two or more central lubricating apparatuses are used, each providing lubrication at points in a single or a plurality of cylinders, i.e. by feeding portions of oil under pressure through respective connecting lines to the various points to be lubricated at relevant time intervals. These relevant intervals may typically be when the piston rings are provided opposite the relevant point of lubrication during the compression stroke when the piston is moving upwards.

A second method for cylinder lubrication appears on more recent engines and is described as high-speed cylinder lubrication.

Hydraulically powered lubricating apparatuses are used for this purpose where the mechanical chain drive is substituted by a hydraulic system which is timed via timing sensors mounted directly on the flywheel of the marine engine. By this kind of cylinder lubrication, a piston pump is typically used as well. In this kind of system, the lubricating oil is fed into the cylinder simultaneously with the passage of the piston such that largely all the lubricating oil is supplied directly onto the piston, typically between the uppermost and the lowermost piston ring. When the lubricating oil is supplied between the piston rings, it is expected that they retain the lubricating oil better and that the piston subsequently distributes the oil along the travel path of the piston. There are also systems as e.g. disclosed in WO 2008/009291 where hydraulically powered apparatuses are used, where both the injected amount and the timing for delivery of the latter may be adjusted.

The lubricating oil is supplied intermittently such that the amount is adjusted on the basis of the frequency of activation of the piston pump as the stroke of the piston pump is constant. The lubricating oil is supplied by these systems via an injection unit that includes a traditional check valve, injector or an atomising valve. Examples of this technique are known from e.g. DK 173 512 or DE 101 49 125.

There are variants of this high-speed lubrication. Thus, is provided a system where the piston pump principle is not used. Instead, the injected amount of lubricating oil is controlled by controlling the opening and closing time. An example of this technique is known from e.g. EP 1 426 571.

The injection may occur by the passage of the piston in upward or downward direction. If this occurs during the downward movement, the oil is distributed on the cylinder face from the point to the lubricated and down in the cylinder lining. However, it is preferred to perform the injection during the upward passage of the piston against the hot end of the cylinder where the need for lubrication is the greatest.

The traditional way by which oil is distributed across the cylinder surface is by establishing two inclining grooves or slots at each point to be lubricated on the cylinder surface, where both grooves or slots initiate from the lubrication point and are directed away from the top of the cylinder. When a piston ring passes such a slot, a drop of pressure occurs in the slot across the piston ring which presses the oil away from the lubrication point. These and other methods, however, have appeared insufficient in that in practice there is observed a substantial variation in the wear occurring along the periphery of the cylinder.

The development towards still greater utilisation of the engines have resulted in an increased mechanical and thermal load on cylinder linings and piston rings, which is traditionally enabled by an increase in the dosing of lubricating oil. However, it has appeared that if the dosing is increased above a certain limit which is not unambiguously defined, the speed of the oil when injected into the cylinder with the mentioned traditional lubrication is so high that instead of remaining on the cylinder face, it forms a jet into the cylinder cavity and thereby disappears. If the dosing is performed as desired while the piston rings are disposed opposite the lubricating units, it is not so critical, but if the dosing occurs outside this period, there are no benefits from a part of the dosed oil.

The two above mentioned methods may also be said to concern a system where lubrication is established by piston distribution of the lubricating oil.

A third method for cylinder lubrication uses systems that feed the lubricating oil directly into the cylinder, directly onto the cylinder wall and before passage of the piston.

In these systems an injector is used which either supplies the lubricating oil in atomised form or in the shape of one or more compact jets. For supplying the lubricating oil to the injector, either a traditionally mechanically driven lubricating apparatus or a hydraulic apparatus is used.

The advantage of this method is that the lubricating oil is already largely distributed on the cylinder wall before passage of the piston. According to this method, the oil is distributed at the top of the cylinder before arrival of the piston, and it is expected that the piston during the expansion stroke carries lubricating oil down into the cylinder. Examples of this technique are known from e.g. WO 0028194, EP 1 350 929 or DK 176 129.

In EP 1 350 929 is described a method where lubricating oil jets - where atomisation of the lubricating oil is avoided to the greatest extent - can be delivered to the cylinder face by injection before, during and/or after passage of the piston. This means that the total amount of lubricating oil is injected onto the cylinder face in at least two parts as indicated in the introduction.

Since the cylinder wall is supplied with oil before passage of the piston, the timing is not so important by this third method as by the two first mentioned systems where the oil is to be supplied exactly in the course of the very short interval when the piston rings are situated opposite the lubricating unit.

Examination has shown that cylinder lubrication according to WO 0028194, so-called SIP lubrication, provides the highest oil film thickness in the cylinder where the wear is the greatest, corresponding to the piston being in top position and in the area of the uppermost piston ring. In contrast to this it has appeared that conventional lubrication or high-speed lubrication provides a thicker oil film on the rest of the travel surface.

The pressure existing by SIP lubrication is required in the lubricating oil lines between pumps and nozzles in order to ensure that the intended atomisation is considerably higher than the pressure by the conventional lubricating methods which operate with pressures of a few bars. SIP valves operate at a preset pressure of up to 60 bars, typically 35-40 bars.

The supplying of lubricating oil has furthermore the purpose of neutralising the acid action on the cylinder wall. The acid action arises by combustion of sulphur-containing fuels and they are best counteracted by supplying the lubricating oil directly at the top of the cylinder. Measurements shown that the SIP lubrication provides the least wear. In practice it appears that corrosive wear is the most critical factor for the service life of a cylinder.

A drawback of conventional lubrication or high-speed lubrication, which both are systems that mainly use the piston for distributing the lubricating oil, is that a certain excessive lubrication is needed in order to ensure sufficient lubricating oil for the top of the cylinder. In particular, lubrication on the piston requires an increase of the amount of lubricating oil in relation to the sulphur content of the fuel in order to achieve satisfactory cylinder conditions.

Correspondingly, for lubrication with systems where the lubricating oil is fed directly onto the cylinder wall it may be a disadvantage that an insufficient amount of oil is provided at the bottom of the cylinder when applying an amount of lubricating oil sufficient for obviating corrosive wear. This is because the piston rings, besides the above-mentioned distributing function, also produce a certain scraping action. Measurements show that SIP lubrication produce less scraping down of lubricating oil than lubrication with piston-distributed lubricating oil.

Another difference of lubricating with systems where the lubricating oil is supplied directly to the cylinder wall and piston-distributed lubrication is a consequence of different amounts of lubricating oil being provided down in the cylinder. The scavenge drain oil is thus measurably less by SIP lubrication (according to WO 0028194) than by systems with piston-distributed lubrication where it is only the piston that distributes the lubricating oil. This means that one of the parameters used for assessing the cylinder condition - namely measurement of Fe-content in the scavenge drain oil - cannot be used directly by comparing the cylinder condition since the same Fe-content will give rise to a concentration that varies depending on the lubrication method.

The scavenge air apertures in longitudinally scavenged two-stroke diesel engines are disposed in such a way that during scavenging, a rotational movement of the gas mixture is started simultaneously with the gas being displaced upwards in the cylinder, leaving it through the exhaust valve at the top of the cylinder. The gas in the cylinder thus follows a helical path or whirl on its way from the scavenge air apertures to the exhaust valve. Due to the centrifugal force, a sufficiently small oil particle located in this whirl will be forced out against the cylinder wall, eventually becoming deposited on the wall. This effect is utilised by introducing the oil portions into the cylinder as a mist of oil particles of suitable size, atomised through nozzles. By adjusting the size of the nozzles, the ejection speed and pressure of the oil before the nozzles, it is possible to control the average size of the oil droplets in the oil mist. If an oil particle or oil droplet is too small, it will "float" too long in the gas stream, eventually being moved away by the scavenging air without hitting the cylinder wall. If it is too large, it will continue too far in its initial path due to its inertia and not reach the cylinder wall, which is due to it being overtaken by the piston and positioned at the top of the piston.

The orientation of the nozzles relative to the flow in the cylinder may be arranged such that the interaction between individual droplets and the gas stream in the cylinder ensures that the oil droplets hit the cylinder wall over an area largely corresponding to the circumferential distance between two lubricating points. In this way, the oil is even distributed more or less uniformly across the cylinder surface before the passage of the piston rings. Besides, the nozzle may be adjusted such that the oil hits the cylinder wall higher up than the nozzles. Thus, before being introduced into the cylinder, the oil will not only be better distributed across the cylinder surface, but will also be distributed on the cylinder surface closer to the top the cylinder where the need for lubrication is the greatest. Both of these facts will result in improved utilisation of the oil with assumed improvement of the relation between the service life of the cylinder and the oil consumption.

The supply of oil to the cylinder surface is to be effected in measured portions which is almost the case with the two previously mentioned traditional systems. The supply means can be traditional lubricating systems, but other supply means with corresponding properties may also be envisaged.

In order to ensure that the pressure in the cylinder does not go backwards in the oil line, a check valve is arranged in a normal way at the end of the lubrication line immediately before the lining of the inner cylinder face. The check valve allows the oil to pass from the oil line to the cylinder lining, but does not let gas pass in the opposite direction. These check valves usually have a modest opening pressure (a few bars).

Characteristics of the three above mentioned methods for lubricating cylinders are:
- Lubrication timing - when is the lubricating oil supplied in the engine cycle?
- Supply amount - how is the relative injected amount adjusted?
- Pump characteristic - how and how fast is the lubricating oil supplied?

It is relevant to look for methods of minimising the lubricating oil consumption by providing an improvement of the cylinder lubrication of large diesel engines, such as marine engines.

It is known from WO2010/149162 to combine the above mentioned three methods whereby the lubricating oil is supplied by a combination of injection of a first part of the lubricating oil above the piston directly on a ring area of the cylinder wall before the passage of the piston, and an injection of a second and/or third part of the lubricating oil, as the second part of the lubricating oil is injected directly on the piston during its passage, and as a third part of the lubricating oil is injected directly on a ring area of the cylinder wall under the piston after passage of the piston.

When a combination of several parts of the lubricating oil is used, an adjustment of the control is to occur such that algorithms are produced which are based on injection of several partial amounts of the lubricating oil at different lubricating times.

By this combination is thus applied a combination of prior art methods for cylinder lubrication such that it is possible to achieve the advantages of each principle and at the same time avoid the drawbacks.

Supplying directly on a ring area may occur in the form of atomisation or in the form of a compact oil jet.

Supply of lubricating oil occurs via lubricating oil injectors that constitute part of the injection units and which are provided in the cylinder wall.

A number of factors are important to take into account when deciding how to lubricate the cylinder wall in order to reduce wear and corrosion. Among these factors which need to be taken into account is for example the Sulphur content of the fuel which is being used, the load under which the engine is running, the temperature which may vary greatly inside the cylinder, the type of lubricating oil and how the lubricating oil is to be applied onto the inner surface wall of the cylinder. These and many more factors have all been addressed with varies different systems and methods in the art.

One such example is disclosed in WO 2008/009291 where the injected amount of lubricating oil as well as the timing for delivery of the lubricating oil may be adjusted. Further similar devices are disclosed in DK 173512 and DE 10149125 and EP 1426571. The common concept for all these prior systems is the fact that it is possible to vary the amount of oil and the timing when the oil is injected into the cylinder.

The method mentioned by way of introduction is an advanced system, which is disclosed in the same applicant's earlier patent publication WO2010/149162. This system also take account of other factors and it is possible to inject the lubricating oil at various times during the revolution of the engine. In this manner it is possible to, by arranging the injection nozzles in proper positions to distribute the oil to the most desirable positions at the right time in order to minimize the use of lubricating oil and at the same time achieve a sufficient/optimized lubrication.

Another example of a more advanced lubricating system is disclosed in DE 10112691 C5 wherein the amount of lubricating oil is adjusted according the Sulphur content of the fuel. It is known that Sulphur in the fuel is very corrosive and by adding extra lubricating oil due to higher Sulphur content in the fuel it is possible to neutralize the sulphuric acid which is created during combustion. This system is regulated by a Sulphur regulation algorithm which by input from a sensor registering the Sulphur content in the fuel regulates the amount of lubricating oil. Moreover, the FE content is monitored and used as indication of wear. This wear is compared with a tolerated wear whereby an alarm may be triggered in case of an impermissible deviation occurs.

It is relevant to look for methods of to more effectively minimising the lubricating oil consumption by providing a distribution of the lubricating oil which takes into account a number of the parameters and which also may involve regulation of the amount of lubricating oil and which distribution may be varied over time of the cylinder lubrication of large diesel engines, such as marine engines.

### Object of the Invention

As should be clear from the description of the prior art above various attempts have been made to improve the lubrication of the cylinder wall and at the same time minimize the amount of lubricating oil needed. It is clear that under any circumstances the overall principle is to provide sufficient lubrication on the cylinder wall such that the piston does not create unwanted tear and wear on the cylinder wall due to mechanical abrasion.

None of the examples mentioned above completely addresses many of the variables which are present in various engines operating under various conditions with various loads. Consequently, there is a need to provide a system which addresses all the needs and situations large slow-running marine diesel engines may be exposed to.

### Description of the Invention

The present invention aims at addressing this need by providing a method for lubricating large slow-running marine diesel engines mentioned by way of introduction and as defined in the preamble of claim 1, and which is peculiar in that a lubrication regime for a given span of time comprises a plurality of lubrication routines, wherein:
- each routine or window within this given span of time has a duration which is a specific part of the given span of time, such that the total time for the number of routines will cover the given span of time,
- each routine has a feed rate, which feed rate may be adjusted with an adjustment which is the variation of the quantity which shall be fed to the cylinder during that particular routine,
- each feed rate is effected with a distribution key involving one or more distinct injection phases.

Even though the quantity is expressed in percentage of the total amount of lubricating oil, then the present invention will also cover situations where the injected quantity is expressed as a part amount of the total amount or any other expressions which may be transformed to an expression as a percentage of the total amount.

It is to be understood that according to the present invention a lubricating routine may involve that only one injection is effected for each revolution. This may e.g. the case for a cleaning routine.

Therefore the lubricating oil in some individual routines may only involve that the lubricating oil is supplied as one injection of only one part of the lubricating oil for such individual routine, whereas a total lubrication of a large slow-running marine diesel engine comprises more lubricating routines over a given span of time. Such span of time may e.g. be a 24 hours span of time or any other span of time which may be found suitable for establishing the desired multitude of possible lubrication routines for effecting a method according to the present invention.

Thus, the main effect is that is possible to distribute the lubricating oil based on parameters like time, temperature, Sulphur content in the fuel, oil film thickness in the cylinder and other parameters being of importance for the condition in the cylinder of large slow-running marine diesel engines.

The changes may be performed on the basis of engine load and condition, and either directly or indirectly on the basis of parameters essential for the cylinder condition (for example revolutions, cylinder lining temperature, engine load, injected fuel amount, lubricating oil quality, lubricating oil viscosity, TBN content of lubricating oil, analysis results for scavenge drain oil (residual TBN, Fe-content etc.).

It is possible, when determining the distribution of the lubricating also to adjust the amount of oil depending on the parameters used in the control unit.

The method according to the present invention may be considered as a further development of the applicant's earlier patent publication WO2010/149162.

According to a further embodiment of the invention the lubrication routine is further distinguished by controlling the frequency of injection relative to the engine speed. Hereby it is possible to differ the frequency of each of the one or more distinct injection phases for optimizing the lubrication in order to address all the working conditions a slow-running marine diesel may be exposed to.

If only SIP lubrication is used there have been examples where the area of the cylinders below the injectors are lubricators are lubricated less than it is desired. This a higher wear than a tolerated wear. The reason for that is believed to be that the engine at low load:
- relatively receives less amount of lubricating oil by the SIP lubrication as experience shows that feed rates may be reduced quite substantially without the wear is increased in the area of the cylinder wall above the injectors,
- the piston rings only have a secondary use in distribution of the lubricating oil and that all lubricating oil is delivered directly onto the cylinder wall,
- the quality of the fuel and lubricating oils may contribute to a situation where the amount of lubricating oil which is left for being "drawn downward in the cylinder" becomes so small at sufficient oil is not added.

In order to compensate for this it is possible to increase the amount of lubricating oil or it is possible to dose lubricating oil directly onto the piston as experience shows that traditional lubrication increases the share of lubricating oil on the area of the cylinder surface below the injectors. By combining the different timings, it is possible to maintain a reduced amount of lubricating oil and simultaneously improve the wear conditions in the areas of the cylinder surface below the injectors.

Extensive testing and development have indicated that particularly three parameters are very important in order to address all the working conditions a slow-running marine diesel may be exposed to. These three parameters are typically the distribution of the overall amount of lubricating oil inside the cylinder, the feed rate adjustment and finally the duration of maintaining a set of parameters.

In the algorithm or multitude of possible lubrication cycles according to the present invention, these three parameters may be varied in view of a number of factors such as for example the Sulphur content of the fuel, the BN number of the particular lubricating oil, the running speed and load on the engine, the change in in- and output, the number of overall running hours of the engine, the relative humidity as well as the ambient air temperature and moisture in combination with the temperature of the engine.

The base number often referred to as the BN is a property that is particular associated with engine oils. The base number can be defined as the oil's ability to neutralize acids which are being produced during the combustion. The higher the base number of the lubricating oil the more acid it will be able to neutralize during use. Usually the price of lubricating oil depends to a certain degree on the BN number, and it is therefore desirable to use as little lubricating oil as possible and use the correct lubricating oil at the right time. It is well known that large slow-running marine diesels use different types of fuel oil for various situations depending on how close they are to land or if they are operating in a harbour etc. The quality of the fuel oil will often reflect in the BN number and as such this is an important factor to take into account when deciding the proper lubrication of the cylinder wall. Consequently, this is one among many factors that the pluralities of lubrication routines of the present invention take into account and which is reflected in the method. In order to select the proper lubrication routine, the control unit receives input either from an input station or from one or more centres. The input station may for example be a keyboard or other electronic input devise which may select (or personnel operating the input device) the proper routine according to ambient conditions. Alternatively sensors may be arranged such that the parameters load, running speed, Sulphur content of the fuel and all the other parameters it is possible to register by means of sensors may be used as input in order to select the proper lubrication routine.

All the lubrication routines are distinguished by duration, a feed rate adjustment and two or more distinct injection phases. The duration is the time which a certain setting and distribution of lubricating oil to various nozzles is maintained before the lubrication routines shift to a different phase.

The feed rate adjustment represents a factor indicating how the overall lubricating oil quantity may be reduced or increased relative to the optimum amount of lubricating oil needed such that the use of lubricating oil is adapted to the specific situation to which the lubrication routine is programmed. As is clear from a further embodiment the feed rate adjustment may vary between - 30% to + 30% of the needed optimum lubricating oil amount. As should be clear from the discussion above the conditions inside the cylinder may vary greatly due to external and internal factors affecting the running of the engine and as such the actual oil quantity will also vary such that the average amount is not sufficient in all conditions and in other conditions it might be too much. The feed rate adjustment takes this into account such that the proper amount of lubricating oil is supplied during the proper duration of that particular phase.

Furthermore, the third parameter which is included in the mentioned method according to the present invention is the fact that the method includes two or more distinct injection phases where a part of the necessary quantity of lubricating oil is injected at one time where another part is injected at a different time. The timing of the particular injection is seen in relation to the position of the piston. The piston will typically have three positions. A bottom position where the piston is as far from the top of the cylinder as it will get prior to the compression stroke, a top position where the piston is a close to the top of the cylinder as possible and an intermediate position where the piston allows space above the piston such that the lubrication of the wall of the cylinder may be achieved by the swirl injection principle, i.e. the lubricating oil is introduced into the cylinder as a mist which will be rotated/swirled around the cylinder due to the turbulence in the scavenger air created by the combustion and as such the lubricating oil will be substantially evenly distributed on the cylinder wall between the top of the piston and the top of the cylinder. By timing the injection and distributing the injection of lubricating oil between various positions according to the position of particularly the piston and the ring pack provided on the piston, it is possible to optimize the lubrication.

In this manner the inventive method as discussed above is, by virtue of the plurality of lubrication routines which may be stored in a memory and executed by means of a control unit, able to address all working conditions of slow-running marine diesel engines.

In a further advantageous embodiment of the invention two or more distinct injection phases, injecting a quantity of lubricating oil expressed in percentages of the total amount of lubricating oil, is selected such that the percentages may vary between 0% and 100% depending on the lubrication routine selected. With this embodiment it is foreseen that for example one injection phase may inject 0% oil which during operation of the engine may not be needed. Therefore, the lubricating oil is saved and provides better economy. In another injection phase one injection may inject 100% oil which during operation of the engine may be needed. The embodiment also foresees that the quantity of lubricating oil may be distributed between two or more and typically three distinct injection phases whereby it is possible to inject lubricating oil for example at the position of the ring pack during the compression stroke and the combustion stroke but also inject lubricating oil into the cylinder according to the SIP principle. It is also further discussed below in a further embodiment.

In a further embodiment of the invention the distinct injection phases also includes a frequency relative to the revolutions of the engine, such that the two or more distinct injection phases injecting a portion of lubricating oil expressed in percentages of the total amount of lubricating oil to be injected, is activated in correspondence to a number of engine revolutions, where the number of revolutions may vary between 1 and 15 between each distinct injection timing is effectuated.

It is also possible that the injecting of a portion of lubricating oil shall need not to be effected for every revolution of the engine. Accordingly, each of the one or more distinct injection phases which will inject a quantity of lubricating oil may be used with different frequency in order to optimize the lubrication.

In a further embodiment of the invention a lubrication regime for a given span of time comprises a plurality of lubrication routines, wherein:
- at least a first lubrication routine, which has a duration of a first part of the given span of time, a negative feed rate adjustment, one to three distinct injection phases;
- at least a second lubrication routine, which has a duration of a second part of the given span of time, a feed rate adjustment of 0%, one to three distinct injection phases;
- at least a third lubrication routine, which has a duration of a third part of the given span of time, a positive feed rate adjustment, one to three distinct injection phases;
- a possible further lubrication routine, which has a has a duration of a further part of the given span of time, a possible feed rate adjustment, one to three distinct injection phases;
- the total time of such parts of the given span of time for all lubrication routines will cover the given span of time; and
where the routines are repeated until the lubrication regime is changed.

In a furthermore detailed embodiment of the invention the lubricating routines have been provided as a 24-hour lubricating regime comprising a plurality of lubrication routines, wherein:
- the first lubrication routine has a duration of eleven hours, a feed rate adjustment of - 15%, three distinct injection phases: a first timing injecting 30%0% of the quantity of the lubricating oil at the position of the ring pack during the compression stroke of the piston, a second timing injecting above the piston injecting 60% of the quantity of lubricating oil, a third timing injecting 10% of the quantity of the lubricating oil at the position of the ring pack during the combustion stroke of the piston;
- the second lubrication routine has a duration of one hour, a feed rate adjustment of 0%, three distinct injection phases: a first timing injecting 40% of the quantity of the lubricating oil at the position of the ring pack during the compression stroke of the piston, a second timing injecting above the piston injecting 50% of the quantity of lubricating oil, a third timing injecting 10% of the quantity of the lubricating oil at the position of the ring pack during the combustion stroke of the piston;
- the third routine has a duration of eleven hours 30 minutes, a feed rate adjustment of -15%, three distinct injection phases: a first timing injecting 30% of the quantity of the lubricating oil at the position of the ring pack during the compression stroke of the piston, a second timing injecting above the piston injecting 60% of the quantity of lubricating oil, a third timing injecting 10% of the quantity of the lubricating oil at the position of the ring pack during the combustion stroke of the piston;
- the fourth lubrication routine has a duration of 30 minutes, a feed rate adjustment of +20%, three distinct injection phases: a first timing injecting 50% of the quantity of the lubricating oil at the position of the ring pack during the compression stroke of the piston, a second timing injecting above the piston injecting 40% of the quantity of lubricating oil, a third timing injecting 10% of the quantity of the lubricating oil at the position of the ring pack during the combustion stroke of the piston;
where the first, second, third and fourth routines are repeated until the lubrication regime is changed.

With this lubricating regime comprising four distinct windows it is foreseen that for most of the time the feed rate adjustment is set at - 15% saving a substantial part of the lubricating oil whereas for two of the windows, i.e. an hour in the middle and half an hour at the end of the regime, plenty of lubricating oil is supplied to the cylinder. Particularly the last half hour where the feed rate adjustment is increased to + 20% is used as a washing program where a substantially large amount of oil is added to the cylinder in order to wash out any pollutants and wear particles such that at least once every 24 hours a thorough and substantially complete cleaning of the cylinder is achieved whereby the normal running regimes and windows foresees an optimum lubrication with the minimum of lubricating oil.

If the fuel oil contains a higher amount of Sulphur it may be advantageous to increase the amount of lubricating oil provided during the second injection phase where the swirl injection principle is used such that any residue and acid created by the combustion is effectively removed from the cylinder during each revolution of the engine. This will be further explained below with reference to a particular example.

In a further embodiment of the invention the lubrication routine includes that , a first, a second or subsequent timing is effectuated every revolution to every fourteenth revolution of the engine, with no two distinct timings effectuated in the same engine revolution.

A number of timings different from 14 may be used. e.g. the number may vary between 10 and 20.

In a further embodiment of the invention the lubricating routines may be provided wherein a lubrication routine may include that, a first timing is effectuated every second to fifth revolution of the engine, a second timing is effectuated at every or up to every third revolution of the engine, and a third timing is effectuated every fifth to every fourteenth revolution of the engine.

It is a further advantage that lubricating oil may be optimized by effecting the injection of lubricating oil only with intervals where it is needed, and which are not identical with the revolution of the engine. The frequency of the injections may be different for the different lubrication routines.

In a further embodiment of the invention the following injection sequences are used:
an injection sequence of Delta-timing according to HJ SIP principle,
an injection effected during upward stroke and between piston rings and
an injection effected during downward stroke and between piston rings, and wherein an automatic cleaning sequence is effected where feed rate increases.

In a further embodiment of the invention the feed rate increases to an amount between 1.0 and 2 g/kWh, preferably approximately 1.5 g/kWh for 30 minutes for every 12 hours.

In a further embodiment of the invention there is an average feed rate between 0.8 and 1.6g/kWh, preferably approximately 1.02 g/kWh.

In a further embodiment of the invention a multi-timing algorithm allows multiple injection angles per cylinder and wherein these injections angles are chosen between:
angles according to the Swirl Injection Principle (SIP),
angles for ring pack lubrication during the compression stroke of the piston and
angles for ring pack lubrication during the combustion stroke of the piston.

The method according to the present invention makes it possible to obtain three new lubrication strategies:
- Multi-timing
- Automatic cleaning sequence
- Delta-timing.

Moore regulation algorithms may be used in the method according to the present invention. Examples of algorithms may be:
RMP-RA (RPM Regulation Algorithm). In RPM-RA the stroke length is constant. The feed rate varies with the fuel index.

MEP-RA (Mean Effective Pressure Regulation Algorithm). In MEP-RA the feed rate is constant, at a given speed. The oil flow over time is proportional to fuel index.

BHP-RA (BHP Regulation Algorithm). In BHP-RA the feed rate is constant. The oil flow over time is proportional to load, this means the oil dosing per revolution is proportional to fuel index.

LCD (Load Change Dependent). Increases the cylinder oil dosing at significant load change of the main engine.

LDT (Load Dependent Timing). Some engines have a variably timed exhaust valve. Optimal SIP timing is dependent on the closure of the exhaust valve. As this changes, so must the SIP timing to achieve the optimal timing. As the exhaust valve timing is a change with load changes the timing of SIP injections becomes load dependent.

S-RA (Sulphur Regulation Algorithm). When fuel oil sulphur content and cylinder oil BN is entered into the system it automatically compensates for the sulphur/BN balance, by adjusting the cylinder oil feed rate

All these algorithms may be combined with each other in a method according to the present invention.

With SIP injection the speed of the motor is important parameter for the adjustment of the amount of lubricating oil seeing that the predetermined angle for the SIP injection is the closing time for the injection. The speed of the motor will be a parameter in deciding when the injection shall be initiated based on the amount of oil to be injected.

### Description of the three new lubricating strategies.

The examples given below use a feed rate instead of a feed rate factor or Adaptive Cylinder Control (ACC) factor, which is used with Sulphur Regulation Algorithm (S-RA). S-RA can also be used in combination with the strategies explained. For further explanation it is possible to seek assistance in publication from the applicant: "920166-10 How to succeed with HJ SIP" for more information on S-RA and ACC.

### Multi-timing

Multi-timing is injecting fresh cylinder oil into a cylinder at multiple crankshaft positions. The algorithm supports injection at up to four different crankshaft positions per cylinder, in each revolution. For each position a quantity ratio is set, this is called the distribution key. The sum of the four quantities is the set feed rate, so the total volume of cylinder oil injected is not increased by having multiple injections per revolution.

Using Multi-timing ensures that the cylinder oil is introduced where it is needed at each revolution. By having control of the cylinder oil distribution an optimal cylinder lubrication in each revolution is achievable.

Ensuring optimal distribution will allow the cylinder oil consumption to be reduced while the cylinder condition is optimized.

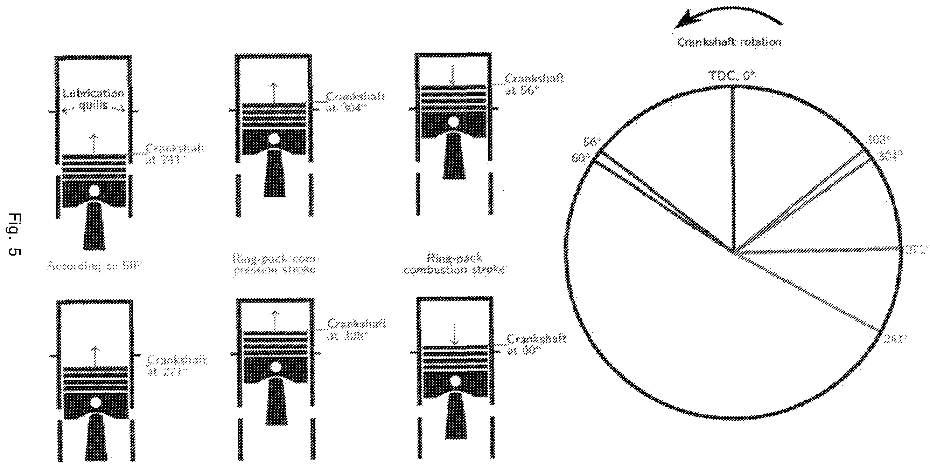

Fig. 5 illustrates example of crankshaft position for the three optimal injection windows.

The Multi-timing algorithm allows multiple injection angles per cylinder. The typical angles of interest are:
According to the Swirl Injection Principle (SIP)
Ring pack lubrication during the compression stroke of the piston
Ring pack lubrication during the combustion stroke of the piston.

The angles used in Fig. 5 are engine specific and will not be generally applicable.

SIP injection is done onto the liner surface above the piston in the compression stroke. When injecting according to SIP, the window of opportunity is relatively large. Tests have shown that the total window is approximately 30° of crankshaft rotation. The actual injection does not last for 30°, the target injection angle is chosen, so both start and end of injection is within the 30° window.

When injecting into the ring pack, the window of opportunity is very narrow compared to SIP. This makes both timing precision and injection duration very important.

A distribution key is set at each angle. A part of the total amount is injected at each angle according to the distribution key. The sum of all injected amounts during an entire revolution, equals the set feed rate.

When starting with Multi-timing it is recommended to start by reducing the current feed rate setting by 10%, if already operating on HJ SIP. Multi-timing recommendations when operating on high Sulphur fuels (> 0.5 %) can be seen in Table 2. Multi-timing recommendations when operating on low Sulphur fuels (≤ 0.5 %), can be seen in Table 3.

**Table 2: Multi-timing recommendation for HSFO (> 0.5%).**

| | **Distribution key** | |
|---|---|---|
| **Feed rate adjustment** | **Quantity [%]** | **Timing** |
| -10 % | 80 | According to SIP |
| | 10 | Ring-pack compression stroke |
| | 10 | Ring-pack cc mbustion stroke |

**Table 3: Multi-timing recommendation for LSFO (≤0.5%).**

| | **Distribution key** | |
|---|---|---|
| **Feed rate adjustment** | **Quantity [%]** | **Timing** |
| -10 % | 60 | According to SIP |
| | 30 | Ring-pack compression stroke |
| | 10 | Ring-pack combustion stroke |

An immediate reduction of 10 % compared to normal HJ SIP is recommended. Further optimization can be made. Further reduce the feed rate according to the recommendations in abovementioned publication: "920166-10 How to succeed with HJ SIP".

### Example:

Using LSFO with an original feed rate of 0.6 g/kWh, the feed rate is reduced to 0.54 g/kWh and the Multi-timing algorithm is set to 60 % according to SIP, and 20 % in the compression stroke and combustion stroke of the piston respectively. This will yield an effective feed rate of 0.324 g/kWh injected according to SIP, 0.108 g/kWh in the compression stroke and combustion stroke respectively. Please see Table 4 below for an overview of this setup.

### Automatic cleaning sequence

The cleaning sequence may also be considered as a cleaning routine.

When operating at low or very low feed rates, certain functions of the cylinder oil may not perform as intended. Experience has shown that cleaning may become an issue when realizing low cylinder oil feed rates, especially when also using low Base Number (BN) cylinder oils. This is due to less detergency in low BN oils which compromises the oils ability to clean the cylinder liner, piston and piston rings of combustion residue and wear particles.

The cleaning functionality is not needed continuously. Good results can be achieved with intermittent cleaning.

**Table 4: Multi-timing example using LSFO.**

| | **Distribution key** | |
|---|---|---|
| **Feed rate [g/kWh]** | **Quantity [%]/[g/kWh]** | **Timing** |
| 0.54 | 60/0.324 | Accord ng to SIP |
| | 30/0.162 | Ring-pack compression stroke |
| | 10/0.054 | Ring-pack combustion stroke |

The automatic cleaning cycle will improve the cleanliness of the piston and cylinder while realizing low feed rates, resulting in improved cylinder condition and reduced wear. This approach has been tested with very positive results on cylinder condition.

The automatic cleaning cycle will periodically increase the cylinder oil feed rate to facilitate better cleaning at low feed rates. This allows a low or very low feed rate during the majority of operation and only increasing the feed rate during short periods, to react with and flush out wear and combustion particles.

The automatic washing cycle can be set up with multiple intervals at various durations.

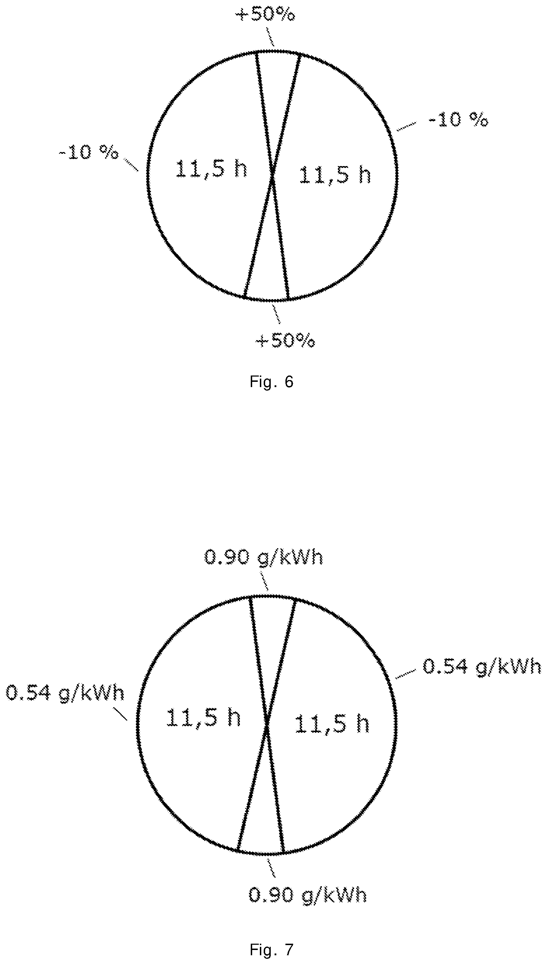

When initiating the automatic cleaning cycle, it is recommended reducing the current feed rate by 10 % and setting an increase in feed rate of 30 % during cleaning cycles. It is recommended to have two half-hour cleaning cycles every 24 hours. Please see Table 5 and Figure 6. Further reduce the feed rate according to the recommendations in above-mentioned publication: "920166-10 How to succeed with HJ SIP".

It is recommended, when optimizing cylinder oil consumption, to start by reducing the feed rate of the long intervals. After finding the long interval optimum feed rates, reduce the short interval feed rates.

**Table 5: Automatic cleaning cycle recommendation.**

| **Period** | **Feed rate adjustment** |
|---|---|
| 0-11.5 hours | -10 % |
| 11.5-12 hours | +50 % |
| 12-23.5 hours | -10 % |
| 23.5-24 hours | +50 % |
| **Average feed rate adjustment** | -7.5 % |

Figure 6 is a visualization of the time distribution of a recommended cleaning sequence over 24 hours.

### Example

An example may be a vessel not able realize a feed rate lower than 0.60 g/kWh due to cleaning challenges. Using the automatic cleaning sequence, a feed rate of 0.54 g/kWh during normal operation and a feed rate of 0.90 g/kWh for two half-hour periods every 24 hours averaging 0.555 g/kWh over 24 hours can be realized. Please see Table 6 and Figure 7 for an overview of this setup.

**Table 6: Automatic cleaning sequence example.**

| **Period** | **Feed rate [g/kWh]** |
|---|---|
| 0-11.5 hours | 0.54 |
| 11.5-12 hours | 0.90 |
| 12-23.5 hours | 0.54 |
| 23.5-24 hours | 0.90 |
| **Average feed rate** | 0.555 |

Fig. 7 is a visualization of the time distribution of a further cleaning sequence example over 24 hours.

### Delta-timing

Delta-timing combines multi-timing and the automatic cleaning sequence providing the ultimate flexibility.

When using Delta-timing, it is possible to place the extra cylinder oil injected during a cleaning sequence, directly in the ring-pack, where it the effect of cleaning is greatest. The Delta-timing algorithm allows for optimum distribution and quantity at any given instance. It provides full and automatic control over how much and when the cylinder oil is introduced into the cylinder.

Using Delta-timing ensures an overall optimal distribution of the cylinder oil. By having full and automated control of the cylinder oil distribution and quantity, an overall optimal cylinder condition at the lowest possible cylinder oil feed rate is achievable due to:
Optimal top liner lubrication
Optimal sulphuric acid neutralization
Optimal ring pack lubrication
Optimal piston ring cleaning

Ensuring optimal distribution will allow the cylinder oil consumption to be minimized while the cylinder condition is optimized.

Using Delta-timing gives the option of changing not only the quantity, but also the multi-timing distribution key at each period. Delta-timing may also be implemented to simply periodically change the multi-timing distribution key without altering the quantity. This can facilitate a cleaning sequence without increasing the quantity.

The Delta-timing algorithm allows a minimum quantity to be set for each injection window, to ensure proper cylinder oil quantity per injection. This means that the frequency of injection, relative to the Main Engine (ME) revolutions may change. E.g. the minimum quantity may be set, so the quantity injected into the ring-pack during an injection is 100 % of the set feed rate at 100 % ME load. If the overall quantity in the ring-pack is set to average 10 % of the total average oil per revolution, at a minimum quantity of 100 % of the set feed rate at 100 % ME load, then the injection ratio will be 1 injection per 10 revolutions at 100 % ME load. Please see the demonstration in table 7 below where the quantity is set to 10 % and the minimum quantity is set to 100 % of the set feed rate at 100 % ME load.

**Table 7: Example of Delta timing distribution.**

| **Engine revolution** | 1 | 2 | 3 | 4 | 5 | 6 | 7 | 8 | 9 | 10 |
|---|---|---|---|---|---|---|---|---|---|---|
| **Injected relative quantity** | 0 % | 0 % | 0 % | 0 % | 0 % | 0 % | 0 % | 0% | 0 % | 100 % |
| **Average relative quantity** | 10 % | | | | | | | | | |

A minimum quantity of 0 % means the injection will happen in every revolution. In the following the minimum quantity is always relative to the set feed rate at 100 % ME load. At any given period, the Delta-timing algorithm allows any quantity and distribution key combination to be used.

When using Delta-timing a reduction of about 22 % in cylinder oil consumption from a feed rate already optimized to SIP is expected. Recommendations vary based on fuel oil Sulphur content.

Injections according to SIP are recommended at every revolution. This is to ensure fresh oil and additives every revolution, in the top part of the cylinder, that is the most aggressive environment due to high temperature and pressure.

**Table 8: Delta-timing HSFO recommendation.**

| | | **Distribution key** | | |
|---|---|---|---|---|
| **Period** | **Feed rate adjustment** | **Quantity [%]** | **Min. quantity [%]** | **Timing** |
| 0-11 hours | -25 % | 80 | 0 | According to SIP |
| | | 10 | 100 | Ring-pack compression stroke |
| | | 10 | 100 | Ring-pack combustion stroke |
| 11-12 hours | 0 % | 60 | 0 | According to SIP |
| | | 30 | 100 | Ring-pack compression stroke |
| | | 10 | 100 | Ring-pack combustion stroke |
| 12-23.5 hours | -25 % | 80 | 0 | According to SIP |
| | | 10 | 100 | Ring-pack compression stroke |
| | | 10 | 100 | Ring-pack combustion stroke |
| 23.5-24 hours | +50 % | 40 | 0 | According to SIP |
| | | 50 | 100 | Ring-pack compression stroke |
| | | 10 | 100 | Ring-pack combustion stroke |
| **Average feed rate adjustment** | -22.4 % | | | |

Figure 8 is a visualization of the Delta-timing time distribution, of the feed rate over 24 hours.

Figure 9 is a visualization of the Delta-timing time distribution, of the quantity distribution key over 24 hours. Listed order is according to SIP, ring-pack compression stroke and ring-pack combustion stroke.

The distribution key is set in 4 windows with periods of 11 hours, 1 hour, 11.5 hours and 0.5 hour. The feed rate should immediately be adjusted to 25 % less cylinder oil compared to normal HJ SIP lubrication, in the two normal operation windows of 11 and 11.5 hours. With the settings given in Table 8 and 9, this gives an immediate average reduction of 22.4 %. Further optimization can be made. Further reduce the feed rate according to the recommendations in_abovementioned publication: "920166-10 How to succeed with HJ SIP".

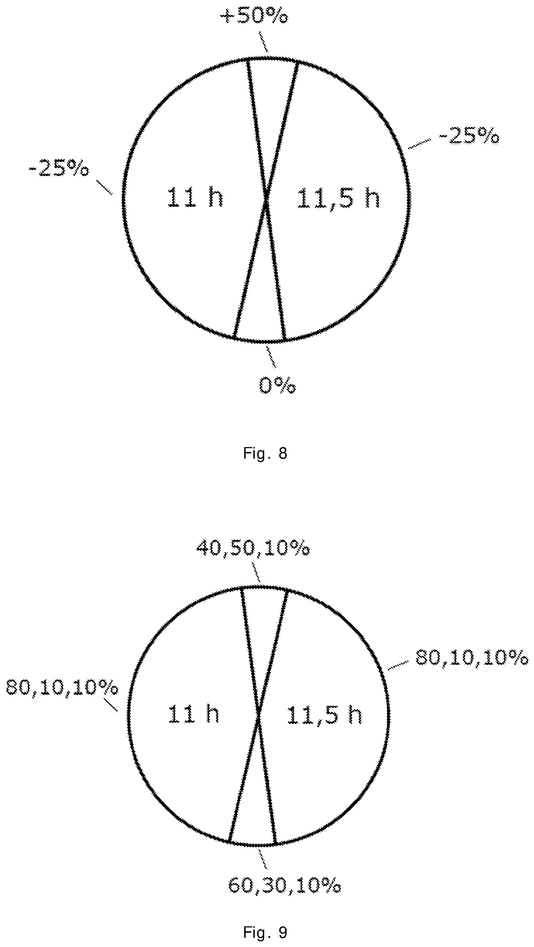

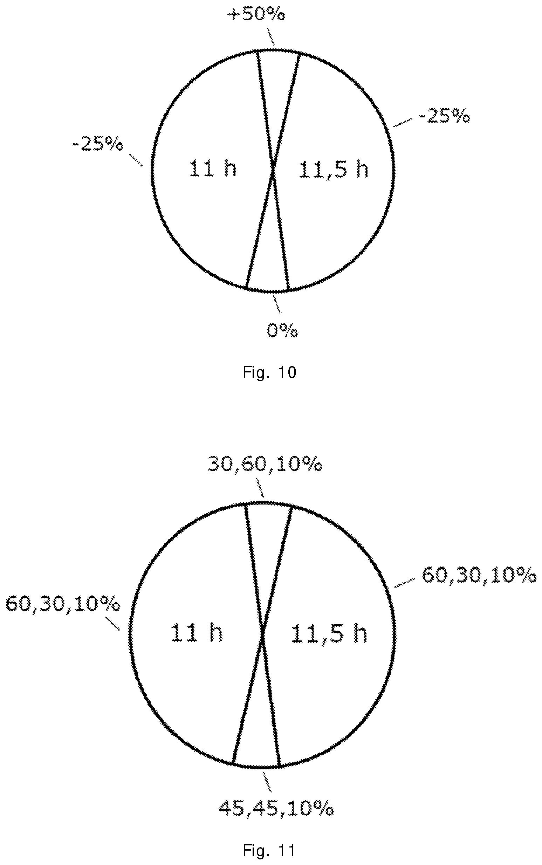

Please see above Table 8, Figure 8 and 9 for HSFO recommendations, and below Table 9, Figure 10 and 11 for LSFO recommendations.

**Table 9: Delta-timing LSFO recommendation.**

| | | **Distribution key** | | |
|---|---|---|---|---|
| **Period** | **Feed rate adjustment** | **Quantity [%]** | **Min. quantity [%]** | **Timing** |
| 0-11 hours | -25 % | 60 | 0 | According to SIP |
| | | 30 | 100 | Ring-pack compression stroke |
| | | 10 | 100 | Ring-pack combustion stroke |
| 11-12 hours | 0 % | 45 | 0 | According to SIP |
| | | 45 | 100 | Ring-pack compression stroke |
| | | 10 | 100 | Ring-pack combustion stroke |
| 12-23.5 hours | -25 % | 60 | 0 | According to SIP |
| | | 30 | 100 | Ring-pack compression stroke |
| | | 10 | 100 | Ring-pack combustion stroke |
| 23-5-24 hours | +50 % | 30 | 0 | According to SIP |
| | | 60 | 100 | Ring-pack compression stroke |
| | | 10 | 100 | Ring-pack combustion stroke |
| **Average feed rate adjustment** | -22.4 % | | | |

Figure 10 is a visualization of the Delta-timing time distribution, of the feed rate over 24 hours.

Figure 11 is a visualization of the Delta-timing time distribution, of the quantity distribution key over 24 hours. Listed order is according to SIP, ring-pack compression stroke and ring-pack combustion stroke.

The difference between HSFO and LSFO is the distribution key.

### Example:

During LSFO operation, a vessel cannot realize a feed rate lower than 0.60 g/kWh. Using Delta-timing, a feed rate of 0.45 g/kWh at a distribution key of 60 % according to SIP, 30 % in the compression stroke of the piston and 10 % in the combustion stroke of the piston during normal operation, a feed rate of 0.60 g/kWh at a distribution key of 45 % according to SIP, 45 % in the compression stroke of the piston and 10 % in the combustion stroke of the piston for an hour every 24 hours and a feed rate of 0.90 g/kWh at a distribution key of 30 % according to SIP, 60 % in the compression stroke of the piston and 10 % in the combustion stroke of the piston for half an hour every 24 hours, averaging 0.466 g/kWh over 24 hours can be realized.

**Table 10: Delta-timing LSFO example.**

| | | **Distribution key** | | |
|---|---|---|---|---|
| **Period** | **Feed rate [g/kWh]** | **Quantity [%]/[g/kWh]** | **Min. quantity [%]** | **Timing** |
| 0-11 hours | 0.45 | 60/0.270 | 0 | According to SIP |
| | | 30/0.135 | 100^{,} | Ring-pack compression stroke |
| | | 10/0.045 | 100 | Ring-pack combustion stroke |
| 11-12 hours | 0.60 | 0.270 | 0 | According to SIP |
| | | 45/ 45/0.270 10/0.060 | 100 | Ring-pack compression stroke |
| | | | 100 | Ring-pack combustion stroke |
| 12-23.5 hours | 0.45 | 60/0.270 | 0 | According to SIP |
| | | 30/0.135 | 100 | Ring-pack compression stroke |
| | | 10/0.045 | 100 | Ring-pack combustion stroke |
| 23.5-24 hours | 0.90 | 30/0.270 | 0 | According to SIP |
| | | 60/0.54 | 100 | Ring-pack compression stroke |
| | | 10/0.09 | 100 | Ring-pack combustion stroke |
| **Average feed rate** | 0.466 | | | |

Figure 11 is a visualization of the Delta-timing time distribution, of the feed rate over 24 hours.

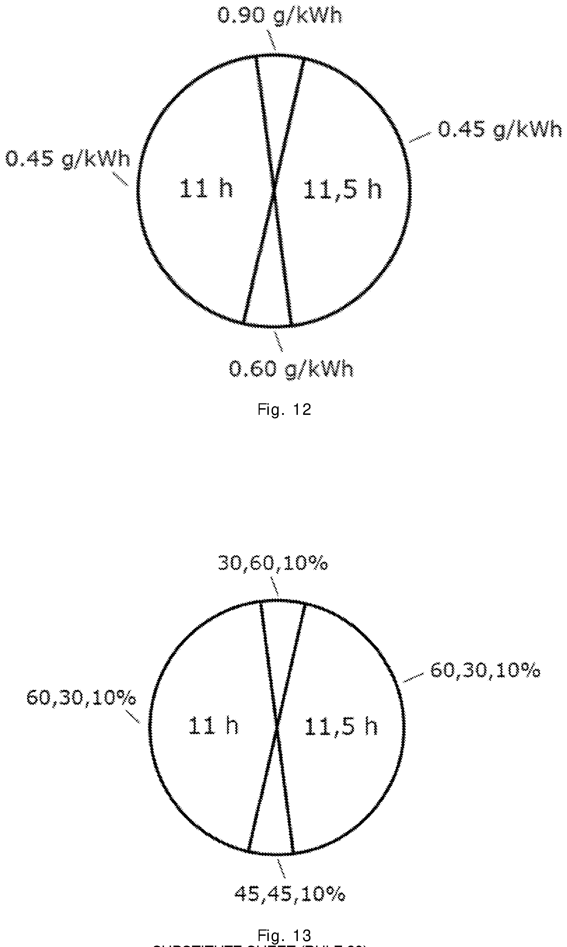

Figure 12 is a visualization of the Delta-timing time distribution, of the quantity distribution key over 24 hours. Listed order is according to SIP, ring-pack compression stroke and ring-pack combustion stroke.

Please see Table 10, Figure 11 and 12 for an overview of the setup with LSFO.

Above is given an explanation of multi-timing and Delta-timing concepts and is explained how an injection frequency may be established for each of the desired injection angles.

It is to be understood that alternatively a minimum amount may be established for each injection instead of the fixed injection frequency explained above. The minimum amount is determined in order to ensure that a sufficient amount of lubricant oil is provided in order to establish a proper injection spray.

This will influence on the system. Accordingly, e.g. if the minimum amount is determined to be 100 mg per injection and the actual feed rate and distribution of the lubricating oil causes a situation with injection of only 30 mg per injection, an algorithm in the control unit will "count together" until the amount of lubricating oil is above the minimum amount. In such example injection will then occur at the injection angle approximately every third revolution of the engine.

### Abbreviations used:

ACC Adaptive Cylinder Control
BN Base Number
HJ SIP Hans Jensen's Swirl Injection Principle
HJL Hans Jensen Lubricators A/S
HSFO High Sulphur Fuel Oil
LSFO Low Sulphur Fuel Oil
ME Main Engine
SIP Swirl Injection Principle
S-RA Sulphur Regulation Algorithm

Further advantages are obtained with the embodiments disclosed in the further dependent claims.

### Description of the Drawing

The invention will now be explained more closely with reference to the accompanying drawing, where:

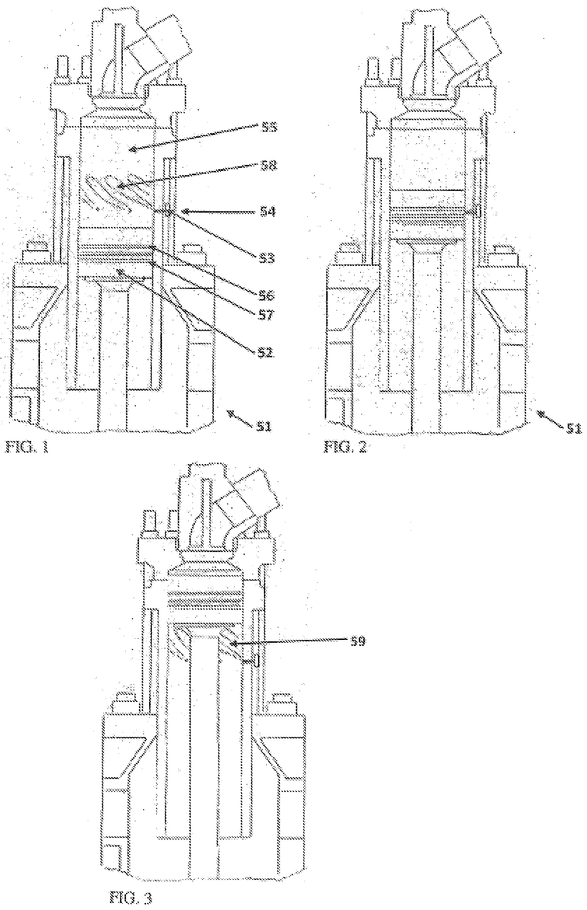

- Fig. 1: shows a schematic sectional view through a cylinder where a first part of lubricating oil is injected into the cylinder,
- Fig. 2: shows a sectional view corresponding to that of Fig. 1, but where a second part of lubricating oil is injected into the cylinder,
- Fig. 3: shows a sectional view corresponding to that of Fig. 1, but where a third part of lubricating oil is injected into the cylinder,

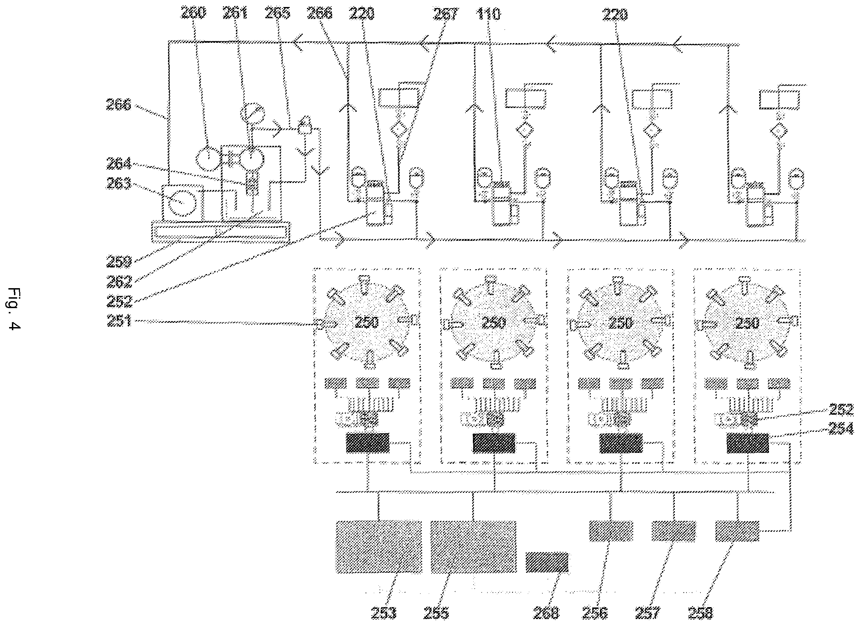

- Fig. 4: shows a schematic overview of a system with a plurality of lubricating apparatuses for use by a method according to the invention, and
- Fig. 5: shows example of crankshaft position for the three optimal injection windows,
- Fig. 6-13: show visualisations of different time distributions in methods according to the present invention, and

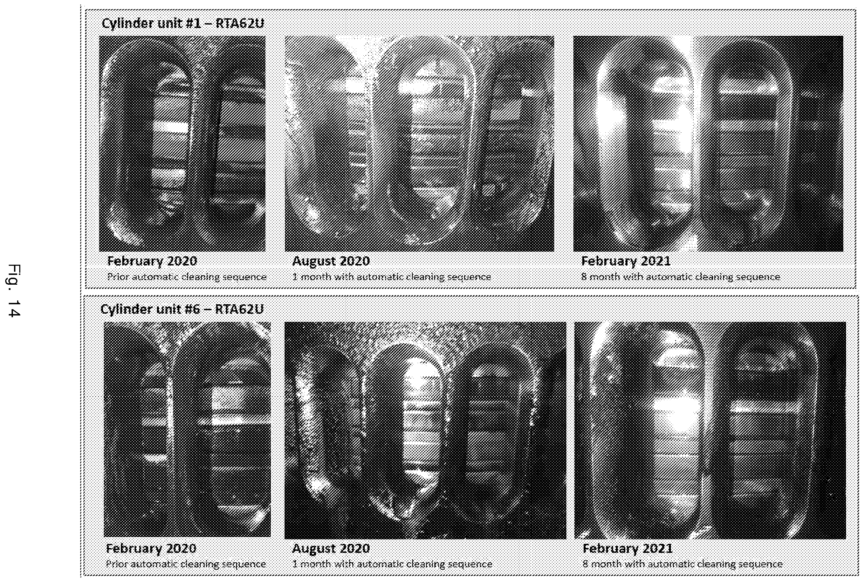

- Fig. 14: shows summarized test results of the introduction of automatic cleaning sequence.

### Detailed Description of the Invention

Figs. 1- 4 corresponds to the Figures 1-3 and 12 in the applicant's earlier patent publication WO2010/149162.

In Figs. 1 to 3 appears a sectional view through a cylinder 51 with a piston 52 and a number of injection units 53 disposed in a ring area 54 of the cylinder wall 55 and which is connected with a not shown lubricating apparatus.

In Fig. 1, the piston 52 is seen in a lower position. Injection of oil 58 is performed from each injection unit directly on the ring area 54 of the cylinder wall 55. The injection occurs at a position above the piston 52 immediately before the piston during its upward movement passes the ring area 54.

In Fig. 2, the piston 52 is shown in a middle position where the injection units 53 are located at a position between an upper piston ring 56 and a lower piston ring 57. Injection of oil 58 from each injection unit is performed directly onto the piston 52 between the upper piston ring 56 and the lower piston ring 57 during the upward movement of the piston through the ring area 54.

In Fig. 3 the piston 52 appears in an upper position. Injection of oil 59 is performed from each injection unit directly on the ring area 54 of the cylinder wall 55. The injection occurs at a position under the piston 52 immediately before the piston during its upward movement passes the ring area 54.

In Fig. 4, the two different lubricating times are shown, depending on being SIP lubrication or traditional lubrication.

In both cases, lubricating oil is delivered into the cylinder during the upward movement of the piston. This means from Bottom Dead Center (BDC) to Top Dead Center (TDC).

The "window" in which we are to time by SIP is placed before the piston passes the lubricating oil injector. The "window" used for traditional lubrication is narrower and, simply expressed, lies after the piston top having passed the lubricating oil injector.

Fig. 4 shows schematically four cylinders 250 and on each cylinder appears eight injection nozzles 251. The lubricating apparatuses 252 are connected with a central computer 253, with local control units 254 typically for each single lubricating apparatus 252. The central computer 253 is coupled in parallel with a further control unit 255 constituting a backup for the central computer. In addition, there is established a monitoring unit 256 monitoring the pump, a monitoring unit 257 monitoring the load and a monitoring unit 258 monitoring the position of the crankshaft.

In the upper part of Fig. 4 there is shown a hydraulic station 259 comprising a motor 260 driving a pump 261 in a tank 262 for hydraulic oil. The hydraulic station 259 furthermore includes a cooler 263 and a filter 264. System oil is pumped via supply line 265 on to the lubricating apparatus via a valve 220. The hydraulic station is furthermore connected with a return line 266 which is also connected with the lubricating apparatus via a valve. 268 is interface for the control unit 254 and the monitoring units 256,257 and 258.

Lubricating oil is forwarded to lubricating apparatus 252 via a line 267 from a lubricating oil supply tank (not shown). The lubricating oil is forwarded from the lubricating apparatus via lines 110 to the injection nozzles 251.

Via the local control units, one may regulate both the lubricating oil amount (in the shape of frequency and stroke) and the timing of the injection. On the basis of various lubricating oil regulation algorithms (e.g. load-dependent lubricating oil reduction) and distribution keys for injection times (thereby varying the ratio between supply of first, second and third parts), by changed conditions of operation the regulation of injection time and amount may be performed automatically. These changes may be performed on the basis of engine load and condition, and either directly or indirectly on the basis of parameters essential for the cylinder condition (for example revolutions, cylinder lining temperature, engine load, injected fuel amount, lubricating oil quality, lubricating oil viscosity, TBN content of lubricating oil, analysis results for scavenge drain oil (residual TBN, Fe-content etc.).

Fig. 5 is a graphical illustration of the widows for three injection angles for different injection principles:
According to the Swirl Injection Principle (SIP)
Ring pack lubrication during the compression stroke of the piston
Ring pack lubrication during the combustion stroke of the piston

The angles used in Fig. 5 are engine specific and will not be generally applicable. For other engines these three angles may be larger or smaller.

For Figs. 6 to 13 reference is made to the above description of these Figures. All Figures illustrates different visualizations of the time distributions of a different cleaning sequences over 24 hours.

According to the method as described above various embodiments of the method may be assembled to a lubrication regime. An example of such a regime is illustrated in table 1.

**Table 1**

| | | **Distribution key** | | |
|---|---|---|---|---|
| **Cycle** | **Feed rate adjustment** | **Quantity [%]** | **Frequency [Inj./rev.]** | **Timing** |
| 0-11 hours | -15 % | 60 % | 1/1 | According to SIP |
| | | 30 % | 1/3 | Ring-pack compression stroke |
| | | 10 % | 1/10 | Ring-pack combustion stroke |
| 11-12 hours | 0 % | 50 % | 1/1 | According to SIP |
| | | 40 % | 1/2 | Ring-pack compression stroke |
| | | 10 % | 1/10 | Ring-pack combustion stroke |
| 12-23.5 hours | -15 % | 60 % | 1/1 | According to SIP |
| | | 30 % | 1/3 | Ring-pack compression stroke |
| | | 10 % | 1/10 | Ring-pack combustion stroke |
| 23.5-24 hours | +20 % | 40 % | 1/1 | According to SIP |
| | | 50 % | 1/2 | Ring-pack compression stroke |
| | | 10 % | 1/10 | Ring-pack combustion stroke |
| **Average feed rate adjustment** | -13.6 % | | | |

In the column named "Cycle" is listed a number of windows having a certain duration, for example the first window has a duration from 0-11 hours, the second window from 11-12 hours, the third window from 12-23.5 hours and the fourth window 23.5-24 hours. The term "window" is another expression for a routine. It is clear that in other embodiments of the invention more or less windows may be provided such that the duration of the various windows may be adjusted accordingly. Also, the duration of each window may be chosen differently. Typically, a regime will consist of a total duration of 24 hours after which the regime is repeated as often as necessary. For example for ships travelling large distances taking many days or weeks, the same regime may be operated after the ship has left the harbor and come on to its normal travelling speed and until it reaches its destination and shall prepare for maneuvering into a new port. In such instances the same lubrication regime may be maintained by repeating the windows for example as indicated in table 1 as often as necessary.

In the second column named "Feed rate adjustment" is indicated the variation of the quantity which shall be fed to the cylinder during that particular window of the regime. For example, in the first window from 0-11 hours - 15% of the average of the lubricating oil content shall be supplied. It is clear that the saving in lubricating oil must be counterbalanced by distribution of the lubricating oil such that sufficient lubrication of the cylinder wall is achieved during operation of the marine engine. This is achieved by injecting the quantity of oil in three different and distinct injection phases where 60% of the quantity is injected according to the SIP principle for every revolution of the engine. That is described in the uppermost line in the first window where the quantity column says 60%, the frequency says 1/1 and the timing is according to SIP, i.e. the swirl injection principle. This shall be construed as 60% of the necessary quantity of lubricating oil to be injected during the first window of 0-11 hours shall be injected for every revolution of the engine by the SIP injectors which means that the piston is removed from the top of cylinder such that a large part of the cylinder wall is exposed. The SIP principle is discussed and patented in the same applicant's earlier European Patent EP 1129275 B1. The second and third injection phases coincide with the ring pack of the piston being positioned adjacent the injection nozzle such that the lubricating oil is injected directly onto the piston and the ring pack. The ring pack will aid in distributing the oil correctly along the cylinder wall and at the same time remove any debris and pollutants which have come to rest near the cylinder wall. For the first distinct injection phase 30% of the oil should be injected and this should be injected for every third revolution of the engine. In the third line of the first window from 0-11 hours it is clear that the third injection phases comprises a quantity of 10% of the oil which shall be injected for every 10 revolution of the engine. In this manner it may be deducted that substantially less lubricating oil is used as compared to injecting 100% of the oil for every revolution of the engine. This results in an overall saving with the regime as indicated in table 1 of -13.6 % lubricating oil as indicated just below the table. However due to the distribution of the injection at various times and positions a complete and sufficient lubrication is achieved.

The fourth window which say "washing cycle" is where a surplus of oil is injected with a certain distribution such that 40% of the quantity is injected according to SIP for every revolution of the engine, 50% of the desired lubricating oil is injected for every other revolution of the engine into the ring pack during the compression stroke and only 10% of the oil is injected every 10^{th} revolution of the engine also into the ring pack however during the combustion stroke.

The regime indicated in table 1 comprising four windows with a certain distribution of the quantity of oil, feed rate adjustment and frequency shall only be construed as an example whereas many other variations of lubrication regimes may be contemplated within the scope of the claims. Typically the proper regime will be selected according to the various factors such as the Sulphur content of the fuel, the base number in the lubricant oil, the load and speed of the engine, the variations in load and speed of the engine, the age of the engine, the make of the engine, relatively humidity temperature of the engine, air temperature etc. Furthermore, the control unit may also apply a different lubrication regimes to different cylinders in the same engine as it is contemplated that some cylinders may have been renovated and therefore requires different lubrication from old cylinders and vice versa.

Fig. 14 shows summarized results of a field test of the introduction of automatic cleaning sequence.

The field test has been conducted for a year (February 2020 to February 2021) to demonstrate the effect of the automatic cleaning sequence. It was chosen to conduct the field test on a container vessel with a RTA62U engine, as the engine had issues with cleanliness and deposits initiated by the changeover to LSFO.

For the entire field test period, the engine has been operating on LSFO, lubricating oil of 40 BN and a feed rate of 1.0 g/kWh. The main engine condition has been evaluated by scavenging-port inspections. For this specific vessel, it was chosen to solve the challenges with cleanliness using the following injection sequence:

| **Delta-timing** | **Automatic Cleaning Sequence** |
|---|---|
| 50% - HJ SIP principle | Feed rate increases to 1.5 g/kWh for 30 minutes for every 12 hours. |
| 40% - upward stroke - between piston rings | |
| 10% - downward stroke - between piston rings | **Average feed rate 1.02 g/kWh** |

The results of the test period are summarized in figure 14.

The results show that the multiple injection of cylinder oil and the automatic cleaning sequence improves significantly the main engine cleanliness.

It is seen that deposits on top lands, piston rings and ring areas are eliminated.

Additionally, the high degree of black lubricating oil sludge formation (as seen prior to the upgrade) is also prevented by more frequent injection of lubricating oil and the cleaning process.

Black sludge is a sticky and viscous mixture, which is formed by insoluble products from the lubricating oil, combustion byproducts, and wear particles.

The challenge posed by excessive black oil sludge is engine blackening, under-crown deposits, piston head corrosion, base number depletion, oil scraper ring clogging and increased piston deposits. This challenge is overcome with the method according to the present invention.

## Claims

1. Method for lubricating large slow-running marine diesel engines, said diesel engines having at least one cylinder (51) in which cylinder a piston (52) moves, said piston having a ring pack (56,57) , where injection of lubricating oil is performed via a number of injection units (53) corresponding to a multiple of the cylinder number in the engine, where the lubricating oil is supplied as a combination of injection of at least two parts of the lubricating oil, where said at least two parts of lubricating oil is delivered at at least two different piston positions, where the at least two different piston positions are selected among piston positions for injecting before, during and after the passage of the piston (52) by the injection unit (53), and where the lubricating oil is supplied by injection directly on a ring area (54) of the wall (55) of the cylinder, wherein each injection unit (53) is controlled by a control unit (254) where a plurality of lubrication routines are stored in a memory in said control unit, where the control unit receives input either from an input station or from one or more sensors, where said input may determine implementation of one of a multitude of possible lubrication routines, where each lubrication routine is distinguished by a duration, a quantity of lubricating oil and/or one or more distinct injection phases relative to the position of the piston (52), where each of the one or more distinct injection phases will inject a quantity of lubricating oil expressed in percentages of the total amount of lubricating oil to be injected, **characterized in that** a lubrication regime for a given span of time comprises a plurality of lubrication routines, wherein:
- each routine or window within this given span of time has a duration which is a specific part of the given span of time, such that the total time for the number of routines will cover the given span of time,
- each routine has a feed rate, which feed rate may be adjusted with an adjustment which is the variation of the quantity which shall be fed to the cylinder during that particular routine,
- each feed rate is effected with a distribution key involving one or more distinct injection phases.

2. Method according to claim 1 where the lubrication routine is further distinguished by controlling the frequency of injection relative to the engine speed.

3. Method according to claim 1 wherein a lubricating routine may involve that only one injection of a quantity of lubricating oil is effected for each revolution, e.g. for a cleaning routine.

4. Method according to claim 1 or 3 wherein each of the two or more distinct injection phases, injecting a quantity of lubricating oil expressed in percentages of the total amount of lubricating oil, is selected such that the percentages may vary between 0% and 100% depending on the lubrication routine selected.

5. Method according to claim 1 where the distinct injection phases also includes a frequency relative to the revolutions of the engine, such that the two or more distinct injection phases injecting a portion of lubricating oil expressed in percentages of the total amount of lubricating oil to be injected, is activated in correspondence to a number of engine revolutions, where the number of revolutions may vary between 1 and 15 between each distinct injection timing is effectuated.

6. Method according to any of claims 1 to 5 where a feed rate adjustment in percentage of the total needed lubricating oil amount is selected between -30% to +30% of the total needed lubricating oil amount.

7. Method according to any of claims 1 to 6 wherein the lubrication regime for a given span of time comprises:
- at least a first lubrication routine, which has a duration of a first part of the given span of time, a negative feed rate adjustment, one to three distinct injection phases;
- at least a second lubrication routine, which has a duration of a second part of the given span of time, a feed rate adjustment of 0%, one to three distinct injection phases;
- at least a third lubrication routine, which has a duration of a third part of the given span of time, a positive feed rate adjustment, one to three distinct injection phases;
- a possible further lubrication routine, which has a has a duration of a further part of the given span of time, a possible feed rate adjustment, one to three distinct injection phases;
- the total time of such parts of the given span of time for all lubrication routines will cover the given span of time; and
where the routines are repeated until the lubrication regime is changed.

8. Method according to any preceding claim, wherein in a lubrication routine includes that, a first, a second or subsequent lubrication timing is effectuated every revolution to every fourteenth revolution of the engine, with no two distinct timings effectuated in the same engine revolution.

9. Method according to any of claims 1 to 6 wherein the following injection sequences are used:
an injection sequence of Delta-timing according to HJ SIP principle,
an injection effected during upward stroke and between piston rings (56,57) and
an injection effected during downward stroke and between piston rings (56,57), and wherein
an automatic cleaning sequence is effected where feed rate increases.

10. Method according to claim 9 wherein
the feed rate increases to an amount between 1.0 and 2 g/kWh, preferably approximately 1.5 g/kWh for 30 minutes for every 12 hours.

11. Method according to claim 9 or 10 wherein there is an average feed rate between 0.8 and 1.6g/kWh, preferably approximately 1.02 g/kWh.

12. Method according to any of the preceding claims, wherein a multi-timing algorithm allows the at least two parts of lubricating oil to be delivered under multiple injection angles per cylinder (51) and wherein these injections angles are chosen between:
angles according to the Swirl Injection Principle (SIP),
angles for ring pack lubrication during the compression stroke of the piston (52) and
angles for ring pack lubrication during the combustion stroke of the piston (52).

## Patentansprüche

1. Verfahren zum Schmieren großer langsam laufender Schiffsdieselmotoren, wobei die Dieselmotoren mindestens einen Zylinder (51) aufweisen, wobei sich ein Kolben (52) in dem Zylinder bewegt, wobei der Kolben ein Ringpaket (56, 57) aufweist, wobei die Einspritzung von Schmieröl über eine Anzahl von Einspritzeinheiten (53) durchgeführt wird, die einem Vielfachen der Zylinderanzahl in dem Motor entspricht, wobei das Schmieröl als eine Kombination einer Einspritzung von mindestens zwei Teilen des Schmieröls zugeführt wird, wobei die mindestens zwei Teile des Schmieröls an mindestens zwei verschiedenen Kolbenpositionen abgegeben werden, wobei die mindestens zwei verschiedenen Kolbenpositionen unter den Kolbenpositionen zum Einspritzen vor, während und nach der Passage des Kolbens (52) durch die Einspritzeinheit (53) ausgewählt werden und wobei das Schmieröl durch Einspritzung direkt auf eine Ringfläche (54) der Wand (55) des Zylinders zugeführt wird, wobei jede Einspritzeinheit (53) durch eine Steuereinheit (254) gesteuert wird, wobei eine Vielzahl von Schmierroutinen in einem Speicher in der Steuereinheit gespeichert sind, wobei die Steuereinheit eine Eingabe entweder von einer Eingabestation oder von einem oder mehreren Sensoren empfängt, wobei die Eingabe eine Implementierung einer von einer Vielzahl von möglichen Schmierroutinen bestimmen kann, wobei jede Schmierroutine durch eine Dauer, eine Quantität von Schmieröl und/oder eine oder mehrere unterscheidungskräftige Einspritzphasen in Bezug auf die position des Kolbens (52) abgegrenzt ist, wobei jede der einen oder mehreren unterscheidungskräftigen Einspritzphasen eine Quantität von Schmieröl einspritzt, die in Prozentsätzen der gesamten einzuspritzenden Menge von Schmieröl ausgedrückt ist, **dadurch gekennzeichnet, dass** ein Schmierregime für eine gegebene Zeitspanne eine Vielzahl von Schmierroutinen umfasst, wobei:
- jede Routine oder jedes Fenster innerhalb dieser gegebenen Zeitspanne eine Dauer aufweist, die derart ein bestimmter Teil der gegebenen Zeitspanne ist, dass die gesamte Zeit für die Anzahl von Routinen die gegebene Zeitspanne abdeckt,
- jede Routine eine Vorschubgeschwindigkeit aufweist, wobei die Vorschubgeschwindigkeit mit einer Einstellung eingestellt werden kann, die die Variation der Quantität ist, die während dieser bestimmten Routine in den Zylinder einzuspeisen ist,
- jede Vorschubgeschwindigkeit mit einem Verteilungsschlüssel erwirkt wird, der eine oder mehrere unterscheidungskräftige Einspritzphasen einschließt.

2. Verfahren nach Anspruch 1, wobei die Schmierroutine ferner durch Steuern der Frequenz der Einspritzung in Bezug auf die Motordrehzahl abgegrenzt ist.

3. Verfahren nach Anspruch 1, wobei eine Schmierroutine einschließen kann, dass bei jeder Umdrehung nur eine Einspritzung einer Quantität von Schmieröl erwirkt wird, z. B. bei einer Reinigungsroutine.

4. Verfahren nach Anspruch 1 oder 3, wobei jede der zwei oder mehr unterscheidungskräftigen Einspritzphasen, in denen eine Quantität von Schmieröl, ausgedrückt in Prozentsätzen der gesamten Menge von Schmieröl, eingespritzt wird, derart ausgewählt wird, dass die Prozentsätze je nach der ausgewählten Schmierroutine zwischen 0 % und 100 % variieren können.

5. Verfahren nach Anspruch 1, wobei die unterscheidungskräftigen Einspritzphasen auch derart eine Frequenz in Bezug auf die Umdrehungen des Motors beinhalten, dass die zwei oder mehr unterscheidungskräftigen Einspritzphasen, die einen Abschnitt des Schmieröls, ausgedrückt in Prozentsätzen der gesamten Menge des einzuspritzenden Schmieröls, einspritzen, in Übereinstimmung mit einer Anzahl von Motorumdrehungen aktiviert werden, wobei die Anzahl von Umdrehungen zwischen 1 und 15 zwischen jedem unterscheidungskräftigen Einspritzzeitpunkt variieren kann.

6. Verfahren nach einem der Ansprüche 1 bis 5, wobei eine Vorschubgeschwindigkeitseinstellung in Prozent der gesamten benötigten Menge von Schmieröl zwischen -30 % und +30 % der gesamten benötigten Menge von Schmieröl ausgewählt wird.

7. Verfahren nach einem der Ansprüche 1 bis 6, wobei das Schmierregime für eine bestimmte Zeitspanne Folgendes umfasst:
- mindestens eine erste Schmierroutine, die eine Dauer von einem ersten Teil der gegebenen Zeitspanne, eine negative Vorschubgeschwindigkeitseinstellung, eine bis drei unterscheidungskräftige Einspritzphasen aufweist;
- mindestens eine zweite Schmierroutine, die eine Dauer von einem zweiten Teil der gegebenen Zeitspanne, eine Vorschubgeschwindigkeitseinstellung von 0 %, eine bis drei unterschiedliche Einspritzphasen aufweist;
- mindestens eine dritte Schmierroutine, die eine Dauer von einem dritten Teil der gegebenen Zeitspanne, eine positive Vorschubgeschwindigkeitseinstellung, eine bis drei unterscheidungskräftige Einspritzphasen aufweist;
- eine mögliche weitere Schmierroutine, die eine Dauer von einem weiteren Teil der gegebenen Zeitspanne, eine mögliche Vorschubgeschwindigkeitseinstellung, eine bis drei unterscheidungskräftige Einspritzphasen aufweist;
- die gesamte Zeit solcher Teile der gegebenen Zeitspanne für alle Schmierroutinen wird die gegebene Zeitspanne abdecken; und
wobei die Routinen so lange wiederholt werden, bis das Schmierregime geändert wird.

8. Verfahren nach einem der vorhergehenden Ansprüche, wobei eine Schmierroutine beinhaltet, dass ein erster, ein zweiter oder nachfolgender Schmierzeitpunkt bei jeder Umdrehung bis zu jeder vierzehnten Umdrehung des Motors bewirkt wird, wobei keine zwei unterscheidungskräftigen Zeitpunkte bei derselben Motorumdrehung bewirkt werden.

9. Verfahren nach einem der Ansprüche 1 bis 6, wobei die folgenden Einspritzsequenzen verwendet werden:
eine Einspritzsequenz mit Delta-Zeitpunkt nach dem HJ-SIP-Prinzip,
eine Einspritzung, die während eines Aufwärtshubs und zwischen Kolbenringen (56, 57) bewirkt wird, und
eine Einspritzung, die während eines Abwärtshubs und zwischen den Kolbenringen (56, 57) bewirkt wird, und
wobei
eine automatische Reinigungssequenz bewirkt wird, wenn die Vorschubgeschwindigkeit steigt.

10. Verfahren nach Anspruch 9, wobei
die Vorschubgeschwindigkeit auf einen Wert zwischen 1,0 und 2 g/kWh steigt, vorzugsweise etwa 1,5 g/kWh für 30 Minuten alle 12 Stunden.

11. Verfahren nach Anspruch 9 oder 10, wobei eine durchschnittliche Vorschubgeschwindigkeit zwischen 0,8 und 1,6 g/kWh, vorzugsweise etwa 1,02 g/kWh, vorhanden ist.

12. Verfahren nach einem der vorhergehenden Ansprüche, wobei ein Multizeitpunkt-Algorithmus es ermöglicht, dass die mindestens zwei Teile von Schmieröl unter mehreren Einspritzwinkeln pro Zylinder (51) abgegeben werden, und wobei diese Einspritzwinkel zwischen Folgendem ausgewählt werden:
Winkel gemäß dem Swirl Injection Principle (SIP),
Winkel für die Ringpaketschmierung während des Kompressionshubs des Kolbens (52) und
Winkel für die Ringpaketschmierung während des Verbrennungshubs des Kolbens (52).

## Revendications

1. Procédé de lubrification de gros moteurs diesel marins lents, lesdits moteurs diesel comportant au moins un cylindre (51) dans lequel cylindre se déplace un piston (52), ledit piston présentant un jeu de segments (56, 57), où l'injection d'huile lubrifiante est réalisée par un certain nombre d'unités d'injection (53) correspondant à un multiple du nombre de cylindres du moteur, où l'huile lubrifiante est fournie par injection combinée d'au moins deux parties d'huile lubrifiante, où lesdites au moins deux parties d'huile lubrifiante sont distribuées à au moins deux positions différentes du piston, où les au moins deux positions différentes du piston sont sélectionnées parmi celles pour l'injection avant, pendant et après le passage du piston (52) par l'unité d'injection (53), et où l'huile lubrifiante est fournie par injection directement sur une zone annulaire (54) de la paroi (55) du cylindre, dans lequel chaque unité d'injection (53) est commandée par une unité de commande (254) où une pluralité de routines de lubrification sont stockées en mémoire dans ladite unité de commande, où l'unité de commande reçoit des données d'entrée provenant d'une station de saisie ou d'un ou plusieurs capteurs, où ladite saisie peut déterminer la mise en œuvre d'une multitude de routines de lubrification possibles, où chaque routine de lubrification se distingue par une durée, une quantité d'huile lubrifiante et/ou une ou plusieurs phases d'injection distinctes selon la position du piston (52), où chacune de l'une ou plusieurs phases d'injection distinctes injectent une quantité d'huile lubrifiante exprimée en pourcentage de la quantité totale d'huile lubrifiante à injecter, **caractérisé en ce qu'un** régime de lubrification pour une période de temps donnée comprend une pluralité de routines de lubrification, dans lequel :
- chaque routine ou fenêtre dans cette période de temps donnée présente une durée qui est une partie spécifique de la période de temps donnée, de telle sorte que le temps total pour le nombre de routines couvrira la période de temps donnée,
- chaque routine présente un débit d'alimentation, lequel débit d'alimentation peut être réglé avec un réglage qui est la variation de la quantité qui doit être introduite dans le cylindre pendant cette routine particulière,
- chaque débit d'alimentation est effectué avec une clé de répartition impliquant une ou plusieurs phases d'injection distinctes.

2. Procédé selon la revendication 1, dans lequel la routine de lubrification est également **caractérisée par** la commande de la fréquence d'injection par rapport au régime du moteur.

3. Procédé selon la revendication 1, dans lequel une routine de lubrification peut impliquer qu'une seule injection d'une quantité d'huile lubrifiante soit effectuée pour chaque tour, par exemple, pour une routine de nettoyage.

4. Procédé selon la revendication 1 ou 3, dans lequel chacune des deux ou plusieurs phases d'injection distinctes, injectant une quantité d'huile lubrifiante exprimée en pourcentage de la quantité totale d'huile lubrifiante, est sélectionnée de telle sorte que les pourcentages peuvent varier entre 0 % et 100 % en fonction de la routine de lubrification sélectionnée.

5. Procédé selon la revendication 1, où les phases d'injection distinctes incluent également une fréquence relative aux tours du moteur, de telle sorte que les deux ou plusieurs phases d'injection distinctes injectant une partie d'huile lubrifiante exprimée en pourcentage de la quantité totale d'huile lubrifiante à injecter, sont activées en correspondance avec un nombre de tours du moteur, où le nombre de tours peut varier entre 1 et 15 entre chaque moment d'injection distinct effectué.

6. Procédé selon l'une quelconque des revendications 1 à 5, où un réglage du débit d'alimentation en pourcentage de la quantité totale d'huile lubrifiante nécessaire est sélectionné entre -30 % et +30 % de la quantité totale d'huile lubrifiante nécessaire.

7. Procédé selon l'une quelconque des revendications 1 à 6, dans lequel le régime de lubrification pour une période de temps donnée comprend :
- au moins une première routine de lubrification, qui présente une durée d'une première partie de la période de temps donnée, un réglage du débit d'alimentation négatif, une à trois phases d'injection distinctes ;
- au moins une deuxième routine de lubrification, qui a une durée d'une deuxième partie de la période de temps donnée, un réglage du débit d'alimentation de 0 %, une à trois phases d'injection distincte ;
- au moins une troisième routine de lubrification, qui a une durée d'une troisième partie de la période de temps donnée, un réglage du débit d'alimentation positif, une à trois phases d'injection distinctes ;
- une autre routine de lubrification possible, qui a une durée d'une autre partie de la période de temps donnée, un réglage du débit d'alimentation possible, une à trois phases d'injection distinctes ;
- le temps total de ces parties de la période de temps donnée pour toutes les routines de lubrification couvrira la période de temps donnée ; et
où les routines sont répétées jusqu'à ce que le régime de lubrification soit modifié.

8. Procédé selon une quelconque revendication précédente, dans lequel une routine de lubrification inclut le fait qu'un premier, un second ou un moment de lubrification ultérieur est effectué à chaque tour jusqu'à chaque quatorzième tour du moteur, sans que deux moments distincts soient effectués dans le même tour du moteur.

9. Procédé selon l'une quelconque des revendications 1 à 6, dans lequel les séquences d'injection suivantes sont utilisées :
une séquence d'injection de Delta-timing selon le principe HJ SIP,
une injection effectuée pendant la course ascendante et entre les segments de piston (56, 57) et
une injection effectuée pendant la course descendante et entre les segments de piston (56, 57), et
dans lequel
une séquence de nettoyage automatique est effectuée lorsque le débit d'alimentation augmente.

10. Procédé selon la revendication 9 dans lequel
le débit d'alimentation augmente jusqu'à une quantité comprise entre 1,0 et 2 g/kWh, de préférence environ 1,5 g/kWh pendant 30 minutes toutes les 12 heures.

11. Procédé selon la revendication 9 ou 10 dans lequel le débit d'alimentation moyen est compris entre 0,8 et 1,6 g/kWh, de préférence environ 1,02 g/kWh.

12. Procédé selon l'une quelconque des revendications précédentes, dans lequel un algorithme de synchronisation multiple permet de distribuer au moins deux parties d'huile lubrifiante sous plusieurs angles d'injection par cylindre (51) et dans lequel ces angles d'injection sont choisis parmi :
des angles selon le principe d'injection tourbillonnaire (SIP),
des angles pour la lubrification des jeux de segments pendant la course de compression du piston (52) et
des angles pour la lubrification des jeux de segments pendant la course de combustion du piston (52).
